# EUROPEAN PATENT SPECIFICATION

(11) **EP 0 482 054 B1**
(45) Date of publication and mention of the grant of the patent: **07.09.1994**
(21) Application number: 90910825.0
(22) Date of filing: 11.07.1990
(51) Int. Cl.: C10G 11/18

(54) **CATALYST STRIPPER UNIT AND PROCESS IN CATALYTIC CRACKING OPERATIONS**
KATALYSATORSTRIPPERANLAGE UND -PROZESS BEI KATALYTISCHEN KRACKVERFAHREN
INSTALLATION ET PROCEDE DE STRIPPAGE POUR OPERATIONS DE CRAQUAGE CATALYTIQUE

(30) Priority: 12.07.1989 GB 8915983
(43) Date of publication of application: 29.04.1992
(73) Proprietor: EXXON RESEARCH AND ENGINEERING COMPANY, Florham Park, New Jersey 07932-0390 (US)
(72) Inventor: HOLMES, Philip, c/o ESSO Engineering (Europe) Ltd., Leatherhead, Surrey KT22 8XE (GB)
(74) Representative: Somers, Harold Arnold
(86) International application number: GB9001069
(87) International publication number: WO9100899

(56) References cited:
- EP-A- 66 725
- EP-A- 254 333
- EP-A- 259 153
- GB-A- 744 687
- GB-A- 2 166 662

## Description

The present invention relates to a catalyst stripper unit and process employed in catalytic cracking operations.

In catalytic cracking operations, a hydrocarbon feedstock is contacted with particles of cracking catalyst at hydrocarbon cracking conditions. The feedstock is converted to vapor-phase products which are recovered, and also to non-vapor phase products. The latter include carbonaceous materials which form a coke-like deposit on the catalyst particles, and also hydrocarbon materials which are adsorbed on and occluded in the catalyst particles. Hydrocarbon materials also tend to be retained between catalyst particles in the so-called "emulsion phase". Since the said hydrocarbon materials are potentially valuable, it is conventional practice to attempt to recover them by contacting the catalyst particles with which they are associated with a stripping gas, usually high-temperature steam. Often, the contact with stripping gas is effected in a stripping zone, separated from the zone in which the cracking is effected, although it will be appreciated that the cracking and stripping can be effected in the same zone at different times. The contacting with stripping gas is usually performed in a counter-current manner, with catalyst passing downwardly and stripping gas passing upwardly, whereby stripped catalyst is recovered at the bottom region of the stripping zone and stripping gas containing stripped hydrocarbon materials is recovered at the top region of the stripping zone. In a common arrangement, the stripping zone contains an array of layers of rods extending across the stripping zone to prevent the descending catalyst particles from passing downwards in an uninterrupted vertical path, whereby better contacting (from the stripping point of view) between the particles and the stripping gas is obtained. Each rod may have a cross-section which is in the form of an inverted letter 'V' : such rods are known as "sheds". The increased separations between particles caused by the rods enhances the ability of the stripping gas to entrain emulsion-phase hydrocarbon materials.

Although known expedients for stripping hydrocarbons from catalyst with stripping gas are reasonably effective, stripped catalyst particles contain further quantities of potentially strippable hydrocarbon material. Since the next operation to which the catalyst particles is usually subjected is oxidative regeneration to remove the coke-like deposit therefrom, the strippable hydrocarbons associated with the catalyst particles will be converted to coke and oxidized coke products during the regeneration operation and thereby lost. The amount of strippable material associated with the stripped catalyst particles not only detracts from the value of the cracked products, but also increases the amount of oxygen required for the regeneration step and increases the heat and gas output therefrom. In some catalytic cracking operations, the capacity of the air blower supplying air to the regenerator may be a factor limiting the throughput of feed and/or the conversion of the catalytic cracking unit. It will therefore be appreciated that any improvement in improving the efficiency of the stripping operation is likely to improve the economics of the catalytic cracking operation.

GB-A-744687 describes and claims an improved process for hydroforming hydrocarbon fractions, of the type wherein the hydrocarbon fractions are contacted in a reaction zone, under hydroforming conditions, with a dense fluidized bed of hydroforming catalyst particles and in the presence of a hydrogen-containing gas, and continually withdrawing from the reaction zone spent catalyst particles and transferring them to a regeneration zone wherein they are maintained in a fluidized state under regenerative conditions whereby carbonaceous deposits are burnt from the said spent catalyst particles, and regenerated catalyst particles are thereafter returned to the reaction zone, characterized in that the spent catalyst particles are maintained under regenerative conditions in the said regeneration zone for at least 35 minutes.

The said regeneration zone may be a regenerator vessel comprising a vertical, elongated vessel, inlet means for the introduction of spent catalyst particles and regeneration gas into the upper part of said vessel, an outlet line for the withdrawal of regeneration gas substantially free of catalyst particles in the top of said vessel, an outlet line for the withdrawal of regenerated catalyst particles in the bottom of said vessel, inlet means for the introduction of additional regeneration gas at the lower part of said vessel, and baffle means within said vessel below the inlet means for spent catalyst particles and regeneration gas in the upper part of said vessel and above the inlet means for the introduction of additional regeneration gas in the lower part of said vessel. The said baffle means may be in the form of a plurality of vertically-separated trays, the catalyst passing downwardly through the regenerator vessel from the highest tray to the lowest tray, and being exposed on each tray to the action of the regeneration gas.

Spent catalyst from the hydroforming zone is stripped in a single dense-phase stripping bed by a suitable stripping gas, and stripped spent catalyst from the stripping bed passes to the regeneration zone.

EP-A-0,066,725 describes and claims a process for converting carbo-metallic oils to lighter products comprising:
(a) providing a converter feed containing 650°F+ (343°C+) material containing components which will not boil below about 1025°F+ (552°C+), said 650°F+ (343°C+) material further being characterized by a carbon residue on pyrolysis of at least about one and by containing at least about 4 ppm of Nickel Equivalents of heavy metals;
(b) providing a cracking catalyst having an average pore volume of at least about 0.2 cm³ per gram;
(c) bringing said cracking catalyst into contact with said feed to form a stream comprising a suspension of said catalyst in said feed, at least a portion of said feed remaining unvaporized and depositing as a liquid on said catalyst particles, and causing the resulting stream to flow through a progressive flow reactor having an elongated reaction chamber which is at least in part vertical or inclined for a predetermined vapor residence time in the range of about 0.5 to about 10 seconds, at a temperature of about 900°F (482°C) to about 1400°F (760°C) and under a pressure of about 10 to about 50 pounds per square inch absolute (68.95 to 344.75 kPa) sufficient for causing a conversion per pass in the range of about 50% to about 90% while producing coke in amounts in the range of about 6 to about 14% by weight based on fresh feed, and laying down coke on the catalyst in amounts in the range of about 0.3 to about 4% by weight, the ratio by weight of catalyst to oil being sufficiently high so that the total pore volume of the catalyst is greater than the volume of feed which will not boil below about 1025°F (552°C);
(d) separating said catalyst from the resulting cracking products;
(e) stripping adsorbed hydrocarbons from said separated catalyst;
(f) regenerating said catalyst with oxygen-containing combustion-supporting gas under conditions of time, temperature and atmosphere sufficient to reduce the carbon on the catalyst to about 0.25% by weight or less, while forming a gaseous combustion product comprising CO and/or CO₂; and
(g) recycling the regenerated catalyst to the reactor for contact with fresh converter feed.

The stripping operation of step (e) is performed in a conventional manner by introducing a stripping gas, such as steam, into a stripping zone where it contacts spent unstripped catalyst from the reactor, and recovering the stripped hydrocarbons and stripping steam from the dilute phase of the reactor. The stripped, spent catalyst passes from the stripping zone to the regenerating step (f).

European published patent application EP-A-254333 describes and claims an integral hydrocarbon catalytic cracking conversion apparatus for the catalytic conversion of a hydrocarbon feed material to a hydrocarbon product material having smaller molecules which comprises :
(a) an elongated catalytic downflow reactor having a top and bottom portion comprising a hydrocarbon feed inlet at a position juxtaposed to said top portion of said downflow reactor, a regenerated catalyst inlet at a position juxtaposed to said top portion of said downflow reactor and a product and spent catalyst withdrawal outlet at a position juxtaposed to said bottom portion of said downflow reactor;
(b) an elongated upflow catalytic riser regenerator having a top and bottom portion for regeneration of said spent catalyst passed from said catalytic downflow reactor having a spent catalyst inlet at a position juxtaposed to said bottom portion of said regenerator, a regeneration gas inlet means for entry of an oxygen-containing gas at a position juxtaposed to said bottom portion of said regenerator and a regenerated catalyst and vapor phase outlet at a position juxtaposed to said top portion of said regenerator, said outlet having a means suitable to remove regenerated catalyst and vapors resultant from the oxidation of coke, present on said spent catalyst, with said oxygen-containing regeneration gas;
(c) a horizontal cyclonic separation means for separating spent catalyst from hydrocarbon product material, said horizontal cyclone separation means being in communication with said bottom portion of said catalytic downflow reactor and said bottom portion of said upflow riser regenerator;
(d) a connection separation means communicating with said top of said upflow riser regenerator and said top of said catalytic downflow reactor to separate regenerated catalyst, derived from said upflow riser regenerator, from spent oxidation gases, said means providing relatively dense phase of catalyst intermediate said top of said upflow regenerator and said top of said catalytic downflow reactor; and
(e) a pressure reduction means for obtention of a higher pressure in said second relatively dense phase immediately upstream of catalytic downflow reactor than the pressure in said top portion of said catalytic downflow reactor.

In drawing Figure 3 of EP-A-254333, there is depicted a catalyst stripping unit comprising two vertically-spaced dense phases of catalyst, and a dip leg connecting the upper dense phase with the lover dense phase. The upper dense phase receives unstripped catalyst from the downflow reactor in which hot regenerated catalyst is contacted with the feed. Steam is injected into the lower dense phase from two sources thereof, and stripped, spent catalyst is withdrawn from the bottom of the stripper unit and passed to a dense phase bed of the riser regenerator. EP-A-254333 provides no disclosure of the construction or operation of the stripper unit nor of the modes of flow of the solids and gas/vapour phase materials therein.

UK published patent application GB-A-2166662 describes and claims an apparatus for separating hydrocarbon products from catalyst particles comprising a cyclone separator, an inlet for introducing into the cyclone separator a mixture of catalyst particles and hydrocarbon products, an outlet for removing gases from the cyclone separator which outlet is so arranged near the upper end of the cyclone separator that an annular space is formed between the walls of the outlet and the cyclone separator, and a stripper assembly having an outlet for gases and comprising at least two interconnected stripper vessels of which the first stripper vessel is in fluid communication with the lower end of the cyclone separator and of which the last stripper vessel is provided with an outlet for catalyst particles, wherein the cyclone separator is provided with means for introducing primary stripping gas into the cyclone separator, and wherein the stripper assembly is provided by means for introducing secondary stripping gas into the stripper vessels. The said interconnected stripper vessels are formed by dividing a vessel having a permeable base into a series of chambers by means of baffles which project upwardly from the base. The baffles are separated in a horizontal sense, and the baffle nearest one end of the vessel is higher than the baffle which is next-nearest to the said one end. The latter baffle is, in turn, higher than the baffle which is yet next-nearest to the said one end. Catalyst from a hydrocarbon cracking stage is received in the chambers defined by the baffles, and is stripped therein by a stripping gas supplied via the permeable base. Each chamber is separately supplied with stripping gas, and the distribution of stripping gas to each chamber is non-uniform. Stripped hydrocarbon material is recovered from the common space above each chamber. Each chamber receives fresh stripping gas at the base thereof, and the efficiency of utilization of stripping gas is therefore relatively low.

UK patent specification GB-A-744687 describes and claims a process for hydroforming hydrocarbon fractions, wherein the hydrocarbon fractions are contacted in a reaction zone, under hydroforming conditions, with a dense fluidized bed of hydroforming catalyst particles and in the presence of a hydrogen-containing gas, and continually withdrawing from the reaction zone spent catalyst particles and transferring them to a regeneration zone wherein they are maintained in a fluidized state under regenerative conditions whereby carbonaceous deposits are burnt from the said spent catalyst particles, and regenerated catalyst particles are thereafter returned to the reaction zone, characterized in that the spent catalyst particles are maintained under regenerative conditions in the said regeneration zone for at least 35 minutes.

The regeneration zone is in the form of a regenerator vessel which comprises a vertical, elongated vessel, inlet means for the introduction of spent catalyst particles and regeneration gas into the upper part of said vessel, an outlet line for the withdrawal of regeneration gas substantially free of catalyst particles in the top of said vessel, an outlet line for the withdrawal of regenerated catalyst particles in the bottom of said vessel, inlet means for the introduction of additional regeneration gas at the lower part of said vessel, and baffle means within said vessel below the inlet means for spent catalyst particles and regeneration gas in the upper part of said vessel and above the inlet means for the introduction of additional regeneration gas in the lower part of said vessel.

The regeneration step is performed at high temperatures in the presence of oxygen to remove carbonaceous deposits from the hydroforming catalyst particles by oxidation.

The present invention provides a catalytic cracking process wherein a hydrocarbon feed is contacted with cracking catalyst particles at cracking conditions, catalyst particles and vapors are separated, separated catalyst particles are stripped of emulsion phase and adsorbed and/or occluded materials by contact with a stripping medium under stripping conditions in a stripping zone, stripped catalyst particles are contacted with an oxidizing gas whereby carbonaceous deposits thereon are oxidatively removed and the catalyst particles are heated, and thus-heated catalyst particles are contacted with further amounts of hydrocarbon feed, characterized in that the stripping of the catalyst particles is effected by passing the particles into the stripping zone which comprises a series of fluidized beds of particles each maintained on a respective substantially horizontal tray adapted to distribute a stripping medium into the bed thereon from a region beneath the tray, each tray having an overflow weir maintaining a respective fluidized bed of particles on the tray, the trays and the respective beds thereon being stacked one above the other in the stripping zone with a vertical space between adjacent trays, the particles passing initially to the top bed of the stack and passing progressively to lower beds via respective downcomers, passing a stripping medium upwardly through each tray and fluidized bed to strip strippable hydrocarbon material therefrom, recovering stripped particles from a region beneath the lowest tray and recovering stripping medium containing stripped hydrocarbon material from the beds of the stripping zone, wherein the average residence time of each catalyst particle in the stripping zone is no greater than 60 seconds and the height of the weirs is small compared to the distance between the top of a weir and the tray immediately above the said weir.

Preferably, each fluidized bed has a depth of approximately 15 cms.

Preferably, stripping medium is introduced into the stripping zone beneath the lowest tray and caused to pass upwardly through all the trays, and used stripping medium containing stripped hydrocarbon material is recovered from above the bed of the top tray.

Preferably, the residence time of catalyst particles in the stripping zone is in the range of from 15 to 30 seconds.

Preferably, each tray comprises an overflow weir defining the depth of the bed of fluidized particles thereon and a downcomer for receiving particles overflowing the weir and for directing said particles downwardly and (except in the case of the lowest tray of the stripping zone) into the bed of a tray vertically spaced therebeneath.

Preferably, the particles have a (respective) predetermined mean residence time in the fluidized bed on each tray.

Preferably, each tray is formed with, or defines, perforations or holes for the upward passage of stripping medium therethrough and into the bed of particles thereon.

Preferably, each tray is formed from perforated metal sheet with or without a bubble cap surmounting each perforation, or with perforations each having upright tubular openings with or without valve members therein, or each tray comprises wire mesh or arrays of metal wires or bars or superimposed arrays of metal wires or bars.

Preferably, adjacent trays are separated by a vertical distance of about 1 m.

Preferably, the stripping medium comprises steam and is employed at a rate of about 4 kg steam per 1000 kg catalyst.

Preferably, the superficial velocity of stripping medium is about 30 cms per second.

During correct operation of the catalytic cracking process of the present invention, the stripping medium is distributed substantially uniformly and thoroughly into the dense phase catalyst particles bed held up on each tray via the perforations or holes defined by the respective tray. Each catalyst bed is maintained in a stable fluidized state, without significant quantities of catalyst "weeping" through the perforations or holes in the tray(s) and with acceptable catalyst entrainment into the dilute phase above the/each tray. Good contacting occurs between the issuing bubbles of stripping medium and the dense catalyst particles emulsion for relatively rapid and efficient flushing away of hydrocarbon vapors surrounding each catalyst particle. This is a highly desirable result from the following viewpoints : (1) it minimizes or reduces the production of coke in the stripper which would otherwise result from continued reactions therein, and (2) it maximises or enhances the concentration gradient for subsequent effective hydrocarbon desorption from the catalyst pores into the emulsion phase (in the spaces or voids between solid catalyst particles) and further hydrocarbon removal. The average residence time of each catalyst particle in the stripper is no greater than 60 seconds, which facilitates efficient and relatively complete stripping.

The invention will now be further described by way of non-limitative example only, and with reference to the accompanying diagramatic drawings, in which:-
Figure 1 is a diagram (not to scale) of the principal features of a known fluidized catalytic cracking unit ("FCCU");
Figure 2 is a diagrammatic cross-section of a stripper embodying the invention; the stripper being shown to a larger scale than the FCCU of Figure 1, and only sufficient detail being illustrated for an understanding of its construction and mode of operation; and
Figures 3a and 3b show, diagrammatically, plan views of two different arrangements of trays which can be employed in the stripper of Figure 2.

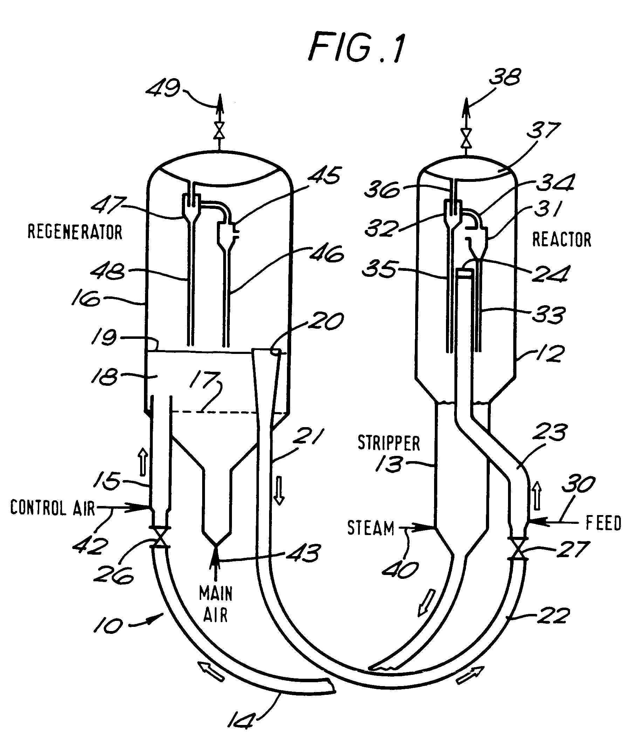

Reference is first made to the FCCU 10 of Figure 1 which comprises a reactor vessel 12 surmounting a stripper 13, the conical bottom of which communicates via a U-bend pipe 14 with a riser 15, the top of which is located within a regenerator vessel 16 at a level above the conical bottom thereof and slightly above a perforated grid 17 which extends across the top of the conical bottom. The regenerator 16 contains fluidized particles of cracking catalyst in a bed 18 which extends up to a top level 19 in the regenerator. Catalyst which tends to rise above level 19 overflows into the top region 20 of a downcomer 21 which is connected to one end of a U-bend pipe 22. The other end of the pipe 22 is connected to a riser 23 which extends substantially vertically and generally upwardly to a termination device 24 defining the top of the riser 23. Each U-bend pipe 14 and 22 has a respective closure valve 26, 27 for emergency and maintenance closing of the flow passages therethrough.

In broad terms, the operation of the FCCU 10 proceeds as follows: a hydrocarbon feed, usually consisting of, or containing, fractions boiling in the gas oil range and higher, is passed into a lower part of the riser 23 from a feed line 30. Usually, the feed from line 30 is introduced into the riser 23 via a plurality of injectors (not shown) arranged equiangularly around riser 23. Hot regenerated catalyst particles passing upwardly through the riser 23 mix with, and heat, the injected feed in the riser 23 at the level of the feeds injectors and higher causing selective catalytic conversion of the feed to cracked products, which include vapor-phase cracked products, and carbonaceous and tarry cracked products which deposit on, and within the pores of, the catalyst particles. The mixture of catalyst particles and vapor-phase products enters the reactor vessel 12 from the riser 23 via apertures (not shown) in the side of the riser termination device 24, whereby to promote the separation of solids from vapors in the reactor vessel 12. Vapors together with entrained solids pass into a cyclone separation system which is herein shown to comprise two cyclones 31 and 32. The cyclone 31 provides primary separation of vapors and entrained solids, a major part of the latter being returned to the base of vessel 12 via a dipleg 33. The solids-depleted vapors from primary cyclone 31 are conducted via pipe 34 to the secondary cyclone 32 for further solids- separation, the separated solids being returned to the base of vessel 12 via dipleg 35, and cracked vapor products are recovered from cyclone 32 via conduit 36, plenum 37 and product line 38.

The catalyst particles from riser 23, together with separated solids from the cyclones 31 and 32, pass downwardly into the top of the stripper 13 wherein they are contacted by upwardly-rising steam injected from line 40 near the base thereof. The steam strips from the particles adsorbed and occluded strippable hydrocarbons, and flushes away emulsion phase hydrocarbons, and the stripped and flushed hydrocarbons, together with the stripping steam, are recovered with the cracked products in product line 38.

Stripped catalytic particles bearing carbonaceous deposits circulate from the conical base of stripper 13 via the U-bend pipe 14 and the riser 15 into the bed 18 of catalyst particles contained in the regenerator vessel. The circulation of particles via the pipe 14 is promoted by control air which is passed into a lower region of the riser 15 from line 42.

The catalyst particles in the bed 18 are fluidized by air passed into the base of reactor vessel 16 from line 43. The air oxidatively removes carbonaceous deposits from the particles and the heat of reaction (e.g., due to combustion and part-combustion) raises the temperature of the particles in the bed to temperatures suitable for cracking the feed hydrocarbons. Hot regenerated catalyst overflows the top region 20 of the downcomer 21 and passes via the downcomer 21 into the U-bend pipe 22 for contact with further quantities of feed supplied from line 30.

The spent air passing upwardly from the top level 19 of the bed 18 in regenerator vessel 16 enters a primary cyclone 45 for separation of entrained particles, the latter being returned to the bed 18 via a dipleg 46. A further stage of solids separation is effected by secondary cyclone 47 which receives the solids-depleted gas from the primary cyclone 45, the separated solids being returned to the bed 18 via a dipleg 48. Spent air is recovered from the top of the regenerator vessel conduit 49.

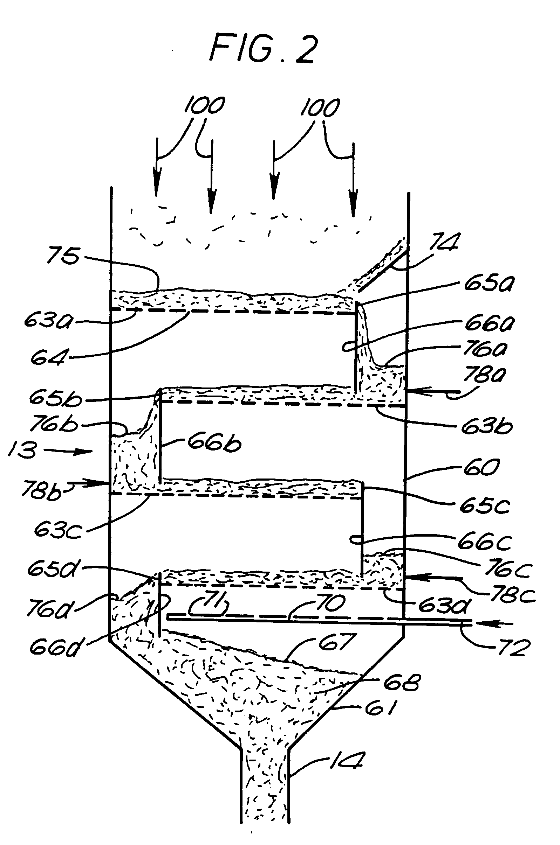

Reference is now made to Figure 2 of the drawings which shows diagrammatically, and to a larger scale, the principal features of a novel stripper 13 which can be used with advantage in the FCCU shown in Figure 1.

The stripper 13 comprises a cylindrical vessel 60 having a conical bottom 61. Catalyst particles with which are associated emulsion phase hydrocarbon material and adsorbed, occluded and deposited hydrocarbon materials, in addition to coke-like carbonaceous deposits, are received at the top end from reactor vessel 12 (as indicated by the arrows 100), and stripped catalyst particles leave the conical base 61 of the stripper via the top of U-bend pipe 14.

Within the cylindrical vessel 60, there are provided a plurality of vertically separated trays 63a, 63b, 63c, 63d. In practical embodiments, there may be more or less trays, the four trays illustrated being for the purpose of exemplification and explanation only. The trays 63 may each have any form which permits the establishment of a layer of catalyst particles thereon while permitting a stripping medium to pass through the tray and through the layer of catalyst particles thereon thereby to fluidize the particles. In the illustrated embodiment, the trays 63 are of the type known as sieve trays, each tray being formed from a plate perforated by holes 64.

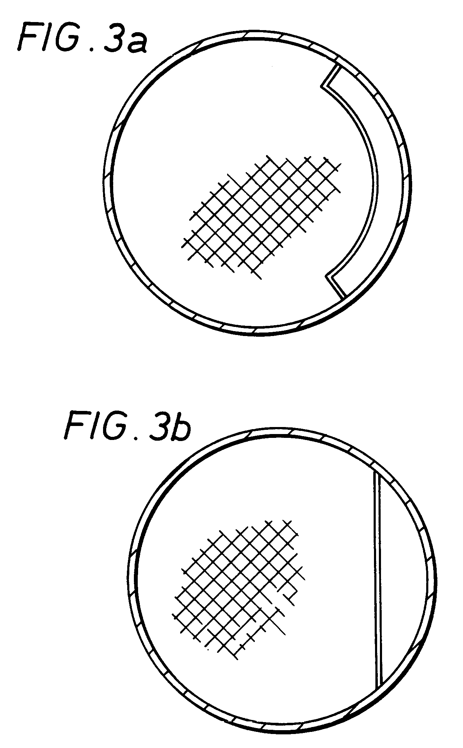

Reference is now made to Figures 3a and 3b which show, in diagrammatic form, the principal features of two typical trays 63 which can be used in the stripper 13 of Figure 2. The features which are shown are those which are necessary for an understanding of the construction of the trays by a person skilled in the art.

In the Figure 3a embodiment, the tray 63 is mounted so as to extend across the internal cross-section of the vessel 60. The tray 63 may be of perforated sheet metal or of the well-known sieve-tray construction employed in distillation columns, but suitably adapted for contacting catalyst particles thereon by stripping gas (e.g., steam) passing upwardly therethrough, as would be understood by those skilled in the art. An arcuate slot 90 is formed over a suitable angular extent (e.g., about 90°) of the periphery of the tray 63, and the edge of the slot 90 is provided with an upstanding weir 65 to retain a predetermined level of catalyst particles on the tray 63. As catalyst particles are added to the tray in the region opposite the slot 90, catalyst particles overflow the top of the weir 65 and fall through the slot onto the tray 63 beneath, preferably onto a region thereof which is more or less diametrically opposite the slot 90 of the said tray 63. The weir 65 also extends below the plane of the tray 63 to form the downcomer 66 (shown in Figure 2) wherein catalyst particles accumulate to form a substantially vapour-tight seal preventing the passage of vapourphase material up the downcomer 66.

Figure 3b shows a tray 63 which is similar to the tray of Figure 3a except that a chord 91 is omitted from part of the periphery of the tray, and the weir 65 (and the corresponding downcomer wall 66, not visible in Figure 3b) is straight.

In the following description of Figure 2, trays 63 of the type shown in Figure 3a are employed.

At one end of each tray is an arcuate, cut-away hole, and an arcuate upstanding weir, respectively 65a, 65b, 65c, 65d, extends around the arcuate periphery of the respective hole and is welded (or otherwise attached) at its opposite ends to the interior of the cylindrical vessel 60. This manner of attachment is not shown but will be understood and appreciated by those skilled in the art.

Each weir 65 forms the upper end region of an arcuate sleeve of metal which extends below the respective tray 63 to define with the interior of the vessel 60 a respective downcomer 66a, 66b, 66c, 66d. The bottom end of each downcomer 66a, 66b, 66c is slightly lower than the top of the weirs 65b, 65c, 65d respectively. The bottom end of downcomer 66d is arranged to be at a level below the top level 67 of catalyst 68 which accumulates in the conical bottom 61 of the stripper, during operation of the cracking unit.

In the space between the top level 67 of catalyst 68 in the conical bottom 61 of the stripper vessel 13 and the lowest tray 63d is disposed a hollow ring distributor 70 having perforated walls (e.g. holes 71) to which is attached a feed line 72 for stripping medium. In the present description, the stripping medium is steam, but it will be known and understood by those skilled in the art that other stripping media can be employed.

Stripping steam passed into the ring distributor 70 from the feed line 72 passes upwardly through the stripper 13, via the holes in the trays 63d, 63c, 63b and 63a. The unstripped catalyst from the reactor vessel 12 descends initially onto the top tray 63a, an inclined deflector plate 74 extending over the top downcomer 66a preventing catalyst from the reactor vessel 12 passing directly into the top downcomer 66a. The catalyst accumulates on the top tray 63a to a level 75 which is determined by the weir 65a. The layer of catalyst thus formed on the top tray 63a is subjected to the stripping action of steam passing through the holes in tray 63a, and the steam also maintains the catalyst particles on the tray in a fluidized state. The stripping steam together with stripped hydrocarbon material from the catalyst rises into the reactor vessel 12 and is recovered via product line 38.

As unstripped catalyst continues to descend from the reactor vessel 12 onto the top tray 63a, partly-stripped fluidized catalyst overflows the weir 65a and descends in the downcomer 66a where it accumulates to a level 76a and provides the catalyst which forms a layer on tray 63b, the depth of the layer being determined by the height of the weir 65b. Stripping steam passes through the holes in the tray 63b and strips catalyst thereon while maintaining the catalyst particles in a fluidized state, the resulting mixture of steam and hydrocarbon serving as the stripping medium for the layer of unstripped catalyst on the top tray 63a.

The excess of catalyst particles on tray 63b above the weir 65b overflows into the downcomer 66b where it accumulates to a level 76b, and is subsequently steam-stripped while in the catalyst layer on tray 63c. Catalyst enters the layer on tray 63c from the accumulation in the downcomer 66b at a rate which substantially equals the rate at which catalyst overflows the weir 65c and passes into the downcomer 66c, forming an accumulation therein up to a level 76c. The latter accumulation supplies catalyst to a catalyst layer on tray 63d up to a level dictated by the weir 65d, and catalyst in the layer on tray 63d is stripped by steam passing through the layer from the steam ring distributor 70 and the holes in tray 63d. The stripped catalyst overflowing the weir 65d in the downcomer 66d forms an accumulation therein up to a level 76d. The accumulations of catalyst in the downcomers substantially prevent stripping steam passing up the downcomers so that the catalyst is steam-stripped while on the trays 63. The height to which catalyst accumulates in each downcomer is a factor of the kinetics of operation of the stripper and those skilled in the art will know what dimensions to apply to the critical parts of the stripper to achieve desirable depths of catalyst accumulation in the downcomers and desirable residence times for the catalyst particles on each tray 65 and desirable steam-catalyst contacting rates on each tray 65. On each tray, the catalyst can approach equilibrium with respect to strippable hydrocarbon material removed therefrom and the stripper of the invention provides multiple countercurrent equilibrium stages which are superior and more efficient from the points of view of steam utilization, steam-catalyst contacting and stripping than known strippers.

In order to maintain the accumulations of catalyst in each downcomer 66 in a flowable condition, relatively small amounts of "aeration" steam are passed into the lower region of each accumulation in the downcomers 66 from respective aeration steam lines 78a, 78b, 78c.

The invention is not limited to the precise embodiments described and/or illustrated. For example, in Figure 2, each downcomer/weir may be at the centre of an annular tray rather than at the side as shown in the examplary embodiments of Figures 3a and 3b. In such a construction, a deflector plate (preferably conical) will be disposed above each downcomer, somewhat after the fashion of an umbrella, to prevent overflowing catalyst from one tray passing down more than one downcomer at a time.

The process and apparatus of the present invention may be employed to achieve an effective hydrocarbon stripping operation in a catalytic cracking unit with, e.g., approximately 15 cm depth of fluidized catalyst on each tray, a tray spacing of about 1 m, a steam rate of about 4 kg/1000 kg catalyst and a superficial velocity of about 30 cm/s, employing several trays. Very efficient flushing of emulsion-phase hydrocarbon material, and enhanced desorption of adsorbed hydrocarbon material from catalyst particles can thus take place over the multiple quasi counter-current stripping stages provided by the trays. Catalyst residence time in the stripper may be of the order of 15 to 30 seconds compared with typical equivalent average dense bed residence times of 1 to 2 minutes. The reduction in residence time reduces the extent to which unstripped hydrocarbons can continue reacting to form coke deposits, thus making the unstripped hydrocarbons more available and susceptible for removal whilst in contact with steam in the stripper.

## Claims

1. A catalytic cracking process wherein a hydrocarbon feed is contacted with cracking catalyst particles at cracking conditions, catalyst particles and vapors are separated, separated catalyst particles are stripped of emulsion phase and adsorbed and/or occluded materials by contact with a stripping medium under stripping conditions in a stripping zone, stripped catalyst particles are contacted with an oxidizing gas whereby carbonaceous deposits thereon are oxidatively removed and the catalyst particles are heated, and thus-heated catalyst particles are contacted with further amounts of hydrocarbon feed, characterized in that the stripping of the catalyst particles is effected by passing the particles into the stripping zone which comprises a series of fluidized beds of particles each maintained on a respective substantially horizontal tray adapted to distribute a stripping medium into the bed thereon from a region beneath the tray, each tray having an overflow weir maintaining a respective fluidized bed of particles on the tray, the trays and the respective beds thereon being stacked one above the other in the stripping zone with a vertical space between adjacent trays, the particles passing initially to the top bed of the stack and passing progressively to lower beds via respective downcomers, passing a stripping medium upwardly through each tray and fluidized bed to strip strippable hydrocarbon material therefrom, recovering stripped particles from a region beneath the lowest tray and recovering stripping medium containing stripped hydrocarbon material from the beds of the stripping zone, wherein the average residence time of each catalyst particle in the stripping zone is no greater than 60 seconds and the height of the weirs is small compared to the distance between the top of a weir and the tray immediately above the said weir.

2. The process of claim 1 characterized in that each fluidized bed has a depth of approximately 15 cms.

3. The process of claim 1 or claim 2 characterized in that stripping medium is introduced into the stripping zone beneath the lowest tray and caused to pass upwardly through all the trays, and used stripping medium containing stripped hydrocarbon material is recovered from above the bed of the top tray.

4. The process of any one of claims 1 to 3 characterized in that the residence time of catalyst particles in the stripping zone is in the range of from 15 to 30 seconds.

5. A process as in any one of claims 1 to 4 characterized in that each tray comprises an overflow weir defining the depth of the bed of fluidized particles thereon and a downcomer for receiving particles overflowing the weir and for directing said particles downwardly and (except in the case of the lowest tray of the stripping zone) into the bed of a tray vertically spaced therebeneath.

6. A process as in any one of claims 1 to 5 characterized in that the particles have a (respective) predetermined mean residence time in the fluidized bed on each tray.

7. A process as in any one of claims 1 to 6 characterized in that each tray is formed with, or defines, perforations or holes for the upward passage of stripping medium therethrough and into the bed of particles thereon.

8. A process as in claim 7 characterized in that each tray is formed from perforated metal sheet with or without a bubble cap surmounting each perforation, or with perforations each having upright tubular openings with or without valve members therein, or each tray comprises wire mesh or arrays of metal wires or bars or superimposed arrays of metal wires or bars.

9. The process of any one of claims 1 to 8 characterized in that adjacent trays are separated by a vertical distance of about 1 m.

10. The process of any one of claims 1 to 9 characterized in that the stripping medium comprises steam and is employed at a rate of about 4 kg steam per 1000 kg catalyst.

11. The process of any one of claims 1 to 10 characterized in that the superficial velocity of stripping medium is about 30 cms per second.

## Patentansprüche

1. Katalytisches Crackverfahren, bei dem ein Kohlenwasserstoffeinsatzmaterial mit Crackkatalysatorteilchen bei Crackbedingungen kontaktiert wird, Katalysatorteilchen und Dämpfe getrennt werden, abgetrennte Katalysatorteilchen von der Emulsionsphase und adsorbierten und/oder eingeschlossenen Materialien durch Kontakt mit einem Strippmedium unter Strippbedingungen in einer Strippzone gestrippt werden, die gestrippten Katalysatorteilchen mit einem oxidierenden Gas kontaktiert werden, wodurch darauf abgesetzte kohlenstoffhaltige Ablagerungen oxidativ entfernt werden, und die Katalysatorteilchen erhitzt werden und die so erhitzten Katalysatorteilchen mit weiteren Mengen Kohlenwasserstoffeinsatzmaterial kontaktiert werden, dadurch gekennzeichnet, daß das Strippen der Katalysatorteilchen bewirkt wird, indem die Teilchen in die Strippzone geleitet werden, welche eine Reihe von Wirbelbetten aus Teilchen umfaßt, die jeweils auf einem entsprechenden im wesentlichen horizontalen Boden gehalten werden, der so eingerichtet ist, daß ein Strippmedium aus einem Bereich unter dem Boden in das darüberliegende Bett verteilt wird, wobei jeder Boden ein Überlaufwehr aufweist, das jeweils ein Wirbelbett aus Teilchen auf dem Boden aufrechterhält, wobei die Böden und die jeweils darauf befindlichen Betten in der Strippzone einer über dem anderen mit einem vertikalen Abstand zwischen benachbarten Böden gestapelt sind, die Teilchen am Anfang zu dem obersten Bett des Stapels geleitet werden und über entsprechende Ablaufschächte sich zunehmend zu tiefergelegenen Betten bewegen, ein Strippmedium aufwärts durch jeden Boden und jedes Wirbelbett geleitet wird, um strippbare Kohlenwasserstoffmaterialien daraus zu strippen, gestrippte Teilchen aus einem Bereich unterhalb des untersten Bodens gewonnen werden und Strippmedium, das gestripptes Kohlenwasserstoffmaterial von den Betten der Strippzone enthält, gewonnen wird, wobei die durchschnittliche Verweilzeit von jedem Katalysatorteilchen in der Strippzone nicht mehr als 60 Sekunden beträgt und die Höhe des Wehrs im Vergleich mit dem Abstand zwischen der Oberkante des Überlaufs und dem sich unmittelbar oberhalb des Wehrs befindlichen Boden gering ist.

2. Verfahren nach Anspruch 1, dadurch gekennzeichnet, daß jedes Wirbelbett eine Tiefe von ungefähr 15 cm hat.

3. Verfahren nach Anspruch 1, dadurch gekennzeichnet, daß das Strippmedium unterhalb des untersten Bodens in die Strippzone eingebracht wird und veranlaßt wird, in Aufwärtsrichtung alle Böden zu passieren, und verbrauchtes Strippmedium, das gestripptes Kohlenwasserstoffmaterial enthält, oberhalb des Bettes des obersten Bodens gewonnen wird.

4. Verfahren nach einem der Ansprüche 1 bis 3, dadurch gekennzeichnet, daß die Verweilzeit der Katalysatorteilchen in der Strippzone im Bereich von 15 bis 30 Sekunden liegt.

5. Verfahren nach einem der Ansprüche 1 bis 4, dadurch gekennzeichnet, daß jeder Boden ein Überlaufwehr, das die Tiefe des Bettes aus verwirbelten Teilchen festlegt, und einen Ablaufschacht zur Aufnahme von Teilchen, die über das Wehr fließen, und zur Abwärtsführung der Teilchen (außer im Fall des untersten Bodens in der Strippzone) in das Bett eines Bodens, der vertikal beabstandet darunter liegt, umfaßt.

6. Verfahren nach einem der Ansprüche 1 bis 5, dadurch gekennzeichnet, daß Teilchen (jeweils) eine festgesetzte mittlere Verweilzeit in dem Wirbelbett auf jedem Boden haben.

7. Verfahren nach einem der Ansprüche 1 bis 6, dadurch gekennzeichnet, daß jeder Boden mit Perforationen oder Löchern für das aufwärtsgerichtete Passieren des Strippmediums durch den Boden und in das sich darauf befindende Bett aus Teilchen gebildet ist oder solche festlegt.

8. Verfahren nach Anspruch 7, dadurch gekennzeichnet, daß jeder Boden aus perforiertem Metallblech mit oder ohne Bodenglokke, die über jeder Perforation liegt, oder mit Perforationen, die jeweils aufrechte Rohröffnungen mit oder ohne Ventilglieder darin aufweisen, gebildet ist oder jeder Boden Maschendraht oder Anordnungen von Metalldrähten oder -stäben oder übereinandergelegte Anordnungen von Metalldrähten oder -stäben umfaßt.

9. Verfahren nach einem der Ansprüche 1 bis 8, dadurch gekennzeichnet, daß benachbarte Böden durch einen vertikalen Abstand von etwa 1 m getrennt sind.

10. Verfahren nach einem der Ansprüche 1 bis 9, dadurch gekennzeichnet, daß das Strippmedium Dampf umfaßt und mit einer Rate von etwa 4 kg Dampf auf 1000 kg Katalysator verwendet wird.

11. Verfahren nach einem der Ansprüche 1 bis 10, dadurch gekennzeichnet, daß die Oberflächengeschwindigkeit des Strippmediums etwa 30 cm/Sekunde beträgt.

## Revendications

1. Procédé de craquage catalytique dans lequel une charge d'alimentation hydrocarbonée est mise en contact avec des particules de catalyseur de craquage dans des conditions de craquage, les particules de catalyseur et les vapeurs sont séparées, les particules de catalyseur séparées sont extraites de la phase émulsique et des matières adsorbées et/ou occluses par contact avec un agent d'extraction dans des conditions d'extraction dans une zone prévue à cet effet, les particules de catalyseur extraites sont mises en contact avec un gaz oxydant en sorte que les dépôts carbonés qui s'y trouvent soient éliminés par oxydation, et les particules de catalyseur sont chauffées, et les particules de catalyseurs ainsi chauffées sont mises en contact avec d'autres quantités de charge d'alimentation hydrocarbonée, caractérisé en ce que l'extraction des particules de catalyseur est effectuée en faisant passer les particules dans la zone d'extraction qui comprend une série de lits de particules fluidisés qui sont chacun maintenu sur un plateau sensiblement horizontal respectif qui est à même de distribuer un agent d'extraction dans le lit qui s'y trouve à partir d'une région placée en dessous du plateau, chaque plateau comportant un déversoir de débordement maintenant un lit de particules fluidisé respectif sur le plateau, les plateaux et les lits respectifs qui s'y trouvent étant empilés l'un au-dessus de l'autre dans la zone d'extraction avec un espacement vertical entre les plateaux voisins, les particules passant initialement du lit supérieur de la pile progressivement aux lits inférieurs via des tubes de descente, en faisant passer un agent d'extraction de bas en haut à travers chaque plateau et chaque lit fluidisé pour en extraire la matière hydrocarbonée qui peut être extraite, en récupérant les particules extraites d'une région située en dessous du plateau le plus bas et en récupérant l'agent d'extraction contenant la matière hydrocarbonée extraite des lits de la zone d'extraction, le temps de résidence moyen de chaque particule de catalyseur dans la zone d'extraction n'étant pas supérieur à 60 secondes et la hauteur des déversoirs étant petite en comparaison de la distance entre la partie supérieure d'un déversoir et le plateau qui se trouve immédiatement au-dessus dudit déversoir.

2. Procédé selon la revendication 1, caractérisé en ce que chaque lit fluidisé a une profondeur d'environ 15 cm.

3. Procédé selon la revendication 1, caractérisé en ce que l'agent d'extraction est introduit dans la zone d'extraction en dessous du plateau le plus bas et soumis à un passage de bas en haut à travers tous les plateaux et l'agent d'extraction épuisé contenant la matière hydrocarbonée extraite est récupéré au-dessus du lit du plateau supérieur.

4. Procédé selon l'une quelconque des revendications 1 à 3, caractérisé en ce que le temps de résidence des particules de catalyseur dans la zone d'extraction se situe dans la plage de 15 à 30 secondes.

5. Procédé selon l'une quelconque des revendications 1 à 4, caractérisé en ce que chaque plateau comprend un déversoir de débordement définissant la profondeur du lit de particules fluidisées s qui s'y trouve et un tube de descente pour recevoir les particules débordant du déversoir et pour diriger lesdites particules vers le bas et (à l'exception du plateau le plus bas de la zone d'extraction) dans le lit d'un plateau verticalement espacé qui se trouve en dessous.

6. Procédé selon l'une quelconque des revendications 1 à 5, caractérisé en ce que les particules ont un temps de résidence moyen prédéterminé (respectif) dans le lit fluidisé de chaque plateau.

7. Procédé selon l'une quelconque des revendications 1 à 6, caractérisé en ce que chaque plateau présente ou définit des perforations ou orifices à travers lesquel(le)s s'effectue le passage ascendant de l'agent d'extraction pour gagner le lit de particules qui se trouve sur le plateau.

8. Procédé selon la revendication 7, caractérisé en ce que chaque plateau est formé d'une tôle métallique perforée avec ou sans calotte de barbotage surmontant chaque perforation, ou avec des perforations présentant toutes des ouvertures tubulaires verticales comportant ou non des éléments de soupape, ou bien chaque plateau comprend un treillis métallique ou des réseaux de fils ou de barres métalliques ou encore des réseaux de fils ou de barres métalliques superposés.

9. Procédé selon l'une quelconque des revendications 1 à 8, caractérisé en ce que les plateaux voisins sont séparés d'une distance verticale de 1 m environ.

10. Procédé selon l'une quelconque des revendications 1 à 9, caractérisé en ce que l'agent d'extraction est constitué de vapeur d'eau et est utilisé à raison d'environ 4 kg de vapeur par 1000 kg de catalyseur.

11. Procédé selon l'une quelconque des revendications 1 à 10, caractérisé en ce que la vitesse superficielle de l'agent d'extraction est d'environ 30 cm par seconde.
